# EUROPÄISCHE PATENTANMELDUNG

(11) **EP 4 647 359 A1**
(43) Veröffentlichungstag der Anmeldung: **12.11.2025**
(21) Anmeldenummer: 25166403.3
(22) Anmeldetag: 26.03.2025
(51) Int. Cl.: B65D 81/05

(54) **VORRICHTUNG ZUM ANBRINGEN AN EINEM PLATTENFÖRMIGEN GEGENSTAND**

(30) Priorität: 08.05.2024 AT 662024
(71) Anmelder: FRIES Management & Investment GmbH, 6832 Sulz (AT)
(72) Erfinder: Watzenegger, Tobias, 6837 Weiler (AT)
(74) Vertreter: Torggler & Hofmann Patentanwälte - Rankweil

(57) **Zusammenfassung**

Vorrichtung (1) zum Anbringen an einem plattenförmigen Gegenstand (2), wobei die Vorrichtung (1) einen Grundkörper (3) aufweist, welcher eine zumindest zu einer Seite hin offene Ausnehmung (4) zur Aufnahme eines Teilbereichs des plattenförmigen Gegenstands (2) aufweist, wobei der Grundkörper (3) einen ersten Teilkörper (5) und einen zweiten Teilkörper (6) aufweist, wobei der erste (5) und der zweite Teilkörper (6) relativ zueinander bewegbar aneinander gelagert sind, wobei die Ausnehmung (4) zwischen den Teilkörpern (5,6) ausgebildet ist.

## Beschreibung

Die Erfindung betrifft eine Vorrichtung zum Anbringen an einem plattenförmigen Gegenstand, wobei die Vorrichtung einen Grundkörper aufweist, welcher eine zumindest zu einer Seite hin offene Ausnehmung zur Aufnahme eines Teilbereichs des plattenförmigen Gegenstands aufweist.

Klimawandel und Ressourcenknappheit sind in der heutigen Zeit ein immer präsenteres Problem der Menschheit. Unser Konsumverhalten hinterlässt einen ökologischen Fußabdruck und neben dem Klimaschutz wird die Anpassung an die unvermeidbaren Folgen des Klimawandels immer wichtiger. Um den ökologischen Fußabdruck so klein wie möglich zu halten, sollte bei der Wahl der Verpackung darauf geachtet werden, dass sie möglichst wenig Material verbraucht und trotzdem eine entsprechende Schutzfunktion bietet. Durchdachtes Lagern, Aufbewahren und Transportieren von plattenförmigen Gegenständen spart Platz und Material. In der Warenlogistik ist einer der wichtigsten Ladungsträger die klassische Holzpalette. Für den Transport zum Kunden werden plattenförmige Gegenstände in der Regel einzeln in Kartons verpackt und liegend übereinander auf Holzpaletten gelagert. Um einen sicheren Transport zu gewährleisten und ein Verrutschen der Holzpalette mit den plattenförmigen Gegenständen zu verhindern, wird ein Spanngurt mit der Palette verbunden. Für den Rücktransport muss zusätzliches Verpackungsmaterial verwendet werden. Ein wesentlicher Nachteil des Verpackungsmaterials besteht darin, dass vor allem Karton sehr feuchtigkeitsempfindlich ist, wodurch auch die Schutzfunktion minimiert wird. Aufgrund der geschilderten Problematik ist es daher notwendig, neue Methoden zu entwickeln, um plattenförmige Gegenstände einwandfrei stapeln, halten, lagern und transportieren zu können.

Grundsätzlich beschränkt sich die Aufgabenstellung der Vorrichtung zum Anbringen an einem plattenförmigen Gegenstand und dem damit ermöglichten Stapeln, Lagern und Transportieren aber nicht nur auf die Güterlogistik, sondern auch auf andere Gebiete, zum Beispiel private Zwecke, wo ebenfalls ein Stapeln, Lagern und Transportieren von plattenförmigen Gegenständen notwendig sein kann.

Die gattungsgemäße EP 2 230 157 B1 offenbart eine Stapelhilfe aus einem Grundkörper mit einer Öffnung, in der sich eine Pufferstruktur befindet, wobei in der Öffnung und somit über die Pufferstruktur ein rechteckiges Produkt gehalten werden kann. Hierbei wird das rechteckige Produkt über die Geometrie gehalten, die sich in Richtung der Tiefe der Öffnung verjüngt. Es kann jedoch dazu kommen, dass sich die Pufferstruktur von der Stapelhilfe aus dem Grundkörper lösen kann und so das rechteckige Produkt aus der Stapelhilfe zu Boden fallen kann. Ein weiteres Problem der vorliegenden Erfindung ist, dass die Pufferstruktur exakt die Breite der Öffnung aufweisen muss, die der schmalsten Seitenlänge des rechteckigen Produkts entspricht, damit das rechteckige Produkt gehalten werden kann. Es ist also vorweg notwendig, eine passende Pufferstruktur herzustellen.

Aus der DE 10 2008 012 774 A1 geht ein Halterungssystem zur horizontalen oder vertikalen Stapelung von Platten, vorzugsweise Photovoltaik-Paneelen, hervor. Das Halterungssystem kann an den Kanten der Platten angebracht werden und besteht aus durch eine mechanische Verzahnung untereinander und Arretierung am Modulrahmen zu stabilen vertikalen Säulen oder horizontalen Schienen verbindbaren Formteilen. Das Halterungssystem wird an der Kante über das Eingriffselement an der Platte befestigt. Über die Zapfen ist es möglich, die Halterungssysteme ineinander zu positionieren.

Aufgabe der Erfindung ist es, eine Vorrichtung eingangs genannter Art dahingehend zu verbessern, dass sie zuverlässig für verschieden dicke plattenförmigen Gegenstände, z.B. zum Aufeinanderstapeln, verwendet werden kann.

Hierfür schlägt die Erfindung ausgehend von einer Vorrichtung eingangs genannter Art vor, dass der Grundkörper einen ersten Teilkörper und einen zweiten Teilkörper aufweist, wobei der erste und der zweite Teilkörper relativ zueinander bewegbar aneinander gelagert sind, wobei die Ausnehmung zwischen den Teilkörpern ausgebildet ist.

Durch die Bewegbarkeit der beiden Teilkörper relativ zueinander kann die Dimension oder in anderen Worten die Öffnungsweite der Ausnehmung an die individuelle Dicke des jeweiligen plattenförmigen Gegenstandes, welcher in der Ausnehmung aufgenommen werden soll, angepasst werden. Dies ist bei der Erfindung schnell und einfach möglich. Dies kann der Anwender zum Stapeln aber auch in anderer Art und Weise zum Beispiel zum sicheren Lagern und/oder Halten und/oder Transportieren und/oder Tragen der plattenförmigen Gegenstände und/oder auch zum Schutz der Eckbereiche und/oder Kantenbereiche der plattenförmigen Gegenstände vor Beschädigung nutzen.

Der Vollständigkeit halber wird darauf hingewiesen, dass im Zuge der Beschreibung dieser Erfindung die verwendeten Zahlwörter wie ein, zwei, drei und dergleichen, grundsätzlich nur die vorhandene Mindestmenge eines Merkmals der erfindungsgemäßen Vorrichtung beschreiben. Einzelne Merkmale oder Bestandteile der Vorrichtung können natürlich auch in größerer Anzahl vorhanden sein. In diesem Sinne ist zum Beispiel das Zahlwort ein im Sinne von mindestens ein usw. zu verstehen.

Bei der Erfindung sind der erste und der zweite Teilkörper, wie gesagt, relativ zueinander bewegbar aneinander gelagert, wobei die Ausnehmung zwischen den Teilkörpern ausgebildet ist. In diesem Zusammenhang ist es wichtig zu erwähnen, dass die Erfindung verschiedene Möglichkeiten zur Realisierung dieser Bewegbarkeit einschließen kann. Dies kann z.B. realisiert werden, indem die beiden Teilkörper relativ zueinander verschiebbar aneinander gelagert sind. Anstelle oder zusätzlich zu dieser Verschiebbarkeit kann aber auch vorgesehen sein, dass die Teilkörper relativ zueinander drehbar aneinander drehbar gelagert sind. Bevorzugt ist jedenfalls vorgesehen, dass sich die beiden Teilkörper relativ voneinander weg und auch relativ aufeinander zu bewegen können. Die beiden Teilkörper können, je nach Art des Vorhabens, auch in mehrere Richtungen bewegbar sein.

Es ist ebenso möglich, dass einer der beiden Teilkörper bei Defekten jederzeit austauschbar ist. Das Material, aus dem die beiden Teilkörper bestehen, wird günstigerweise so gewählt, dass die Oberfläche der Ausnehmung den plattenförmigen Gegenstand nicht zerkratzt und/oder in irgendeiner anderen Art und Weise beeinträchtigt oder gar zerstört.

In bevorzugten Ausgestaltungsformen ist vorgesehen, dass die Vorrichtung ein elastisches Element aufweist, wobei die beiden Teilkörper zum Festklemmen des plattenförmigen Gegenstands in der Ausnehmung vom elastischen Element in Richtung aufeinander zu elastisch vorgespannt sind. Mittels des elastischen Elements kann der plattenförmige Gegenstand zwischen den Teilkörpern festgeklemmt werden. Die Vorrichtung ist dann klemmend am plattenförmigen Gegenstand gehalten. Dies ermöglicht einerseits eine sichere und zuverlässige Befestigung der Vorrichtung am plattenförmigen Gegenstand. Andererseits ermöglicht das elastische Element auch eine einfache und schnelle Montage und Demontage der Vorrichtung am und vom plattenförmigen Gegenstand. Die Öffnungsweite der Ausnehmung kann also gegen die Elastizität verstellbar sein. Alternativ oder zusätzlich zum elastischen Element könnten die beiden Teilkörper aber auch mittels einer Schraubverbindung der Vorrichtung miteinander verbunden sein, wobei mittels der Schraubverbindung die Teilkörper am, in die Ausnehmung aufgenommenen, plattenförmigen Gegenstand festklemmbar sind. Alternativ dazu wäre es aber grundsätzlich auch möglich, dass die beiden Teilkörper durch Festschrauben, Festkleben oder dergleichen am, in der Ausnehmung aufgenommenen, plattenförmigen Gegenstand angebracht werden.

In der vorliegenden Erfindung kann das elastische Element durch voneinander Entfernen der Teilkörper komprimierbar sein. Das elastische Element kann eine Schraubenfeder sein.

Die vorliegende Vorrichtung weist in bevorzugten Ausführungsbeispielen eine Druckfeder auf. Es ist denkbar, dass die Druckfeder beispielsweise eine konisch oder zylindrisch geformte Druckfeder ist. Der Begriff komprimierbar kann auch so beschrieben werden, dass bei äußerer Krafteinwirkung die Druckfeder zusammengedrückt also komprimiert wird. Sobald die Krafteinwirkung entfernt wird, dehnt sich die Feder wieder aus. Alternativ zur Druckfeder ist aber, bei dementsprechender Ausbildung, auch denkbar, dass in einem weiteren Ausführungsbeispiel eine Zugfeder verwendet wird.

Das elastische Element kann ein fixer Bestandteil der Vorrichtung sein. Es kann auch, vorzugsweise zerstörungsfrei, lösbar und damit, beispielsweise bei Defekten, austauschbar und/oder durch eine andere Art von elastischem Element ersetzbar sein.

Ein Teil der Vorrichtung, insbesondere der Grundkörper, kann so ausgebildet sein, dass die Ausnehmung, die zwischen den beiden Teilkörpern ausgebildet ist, zur Aufnahme eines Eckbereichs des plattenförmigen Gegenstands ausgeformt ist. Durch die Aufnahme des plattenförmigen Gegenstands über dessen Eckbereich ist es auch möglich, dass dieser vor Beschädigung geschützt wird. Die Erfindung schließt ebenso die Möglichkeit mit ein, dass der Grundkörper so ausgebildet ist, dass er den plattenförmigen Gegenstand mit dessen Längskanten oder Querkanten in der Ausnehmung aufnehmen kann. Die Längskanten des plattenförmigen Gegenstands können auch als dessen Längsseiten und seine Querkanten auch als Querseiten bezeichnet werden. Generell gesprochen kann die Ausnehmung aber so unterschiedlich ausgeformt sein, dass sie unterschiedlich ausgeformte Bereiche von plattenförmigen Gegenständen aufnehmen kann, also z.B. auch abgerundete Ecken oder Kanten oder dergleichen.

Eine bevorzugte Ausgestaltung der vorliegenden Erfindung sieht vor, dass der erste Teilkörper eine Säule mit einer ersten Anlageschulter für das elastische Element und der zweite Teilkörper eine Hülse mit einer zweiten Anlageschulter für das elastische Element aufweisen kann. Die Vorrichtung kann so konfiguriert sein, dass sich die Säule im Innenraum der Hülse befinden kann.

In einer bevorzugten Variante ist vorgesehen, dass die Säule ein längserstrecktes Säulenelement und einen lösbar am Säulenelement angebrachten Deckel aufweist und die erste Anlageschulter an dem Deckel ausgebildet ist. Der Deckel kann jederzeit, vorzugsweise zerstörungsfrei, und damit gegebenenfalls wiederverwendbar, lösbar sein. Es ist somit ein Austausch bei Defekten denkbar. Neben der lösbaren Befestigung des Deckels kann aber auch sein, dass der Deckel fix am zweiten Teilkörper befestigt ist. In anderen Worten nicht lösbar befestigt ist. Der Deckel weist vorzugsweise eine runde Form auf. Eine Alternative zum runden Deckel ist aber beispielsweise dahingehend möglich, dass der Deckel eine eckige und/oder ovale Form aufweist.

In der bevorzugsten Variante ist vorgesehen, dass das elastische Element in einem Zwischenraum zwischen der Säule und der Hülse angeordnet ist. Es kann vorgesehen sein, dass die Säule und die Hülse und das elastische Element eine koaxiale Anordnung aufweisen. Die Hülse und die Säule können so positioniert sein, dass die Säule in einem Innenraum der Hülse angeordnet ist.

Bevorzugt vorgesehen ist, dass der erste Teilkörper ein erstes Führungselement und der zweite Teilkörper ein zweites Führungselement aufweist. Diese Führungselemente können zum Führen der Teilkörper bei einer Relativbewegung aufeinander zu und voneinander weg verwendet werden. Das Führungselement kann somit ein geführtes aufeinander zu und voneinander weg Bewegen ermöglichen. Das erste Führungselement und das zweite Führungselement können so ausgeformt sein, dass ihre Ecken abgeflacht beziehungsweise abgerundet sein können. Die Führungselemente können sich auf einer Seite des jeweiligen Teilkörpers und/oder auch zwischen zwei Säulenelementen und/oder Hülsenelementen befinden kann. Eine weitere Möglichkeit ist, dass sich das jeweilige Führungselement auf der Seite des jeweiligen Teilkörpers befinden kann, die kein Säulenelement und/oder Hülsenelement aufweist.

Bei der vorliegenden Erfindung ist außerdem denkbar, dass der erste Teilkörper auf einer von der Ausnehmung abgewandten Seite ein erstes Formschlusselement und der zweite Teilkörper auf einer von der Ausnehmung abgewandten Seite ein zweites Formschlusselement aufweist. Bei der Vorrichtung ist denkbar, dass das elastische Element in eine Wirkrichtung vorgespannt ist und das erste Formschlusselement und das zweite Formschlusselement für einen Formschluss in Richtung quer oder orthogonal zur Wirkrichtung ausgebildet sind.

Unter dem Begriff quer werden Winkel von 1° bis 89°, insbesondere von 70° bis 89°, verstanden. Der Begriff orthogonal beschreibt einen Winkel von 90°.

Es ist möglich, dass der erste Teilkörper und/oder der zweite Teilkörper, beispielsweise an einer Außenseite, eine Gurtaufnahme zum Anbringen eines Spanngurts aufweist bzw. aufweisen. Es ist also denkbar, dass nur der erste Teilkörper oder nur der zweite Teilkörper oder beide Teilkörper eine solche Gurtaufnahme zum Anbringen eines Spanngurts aufweist bzw. aufweisen. Hinsichtlich der Anbringung eines Spanngurts gibt es zwei Varianten. Der Spanngurt kann fix mit dem ersten und/oder zweiten Teilkörper über eine Gurtaufnahme verbunden sein. Eine weitere Möglichkeit ist aber auch, dass der Spanngurt jederzeit, vorzugsweise zerstörungsfrei lösbar ist. Der Spanngurt kann als zusätzlicher Schutz vor Verrutschen während des Transports der plattenförmigen Gegenstände an den beiden Teilkörpern angebracht werden. Es besteht aber auch die Möglichkeit, einen Gurt zum Tragen und/oder Heben der plattenförmigen Gegenstände zu verwenden.

Mittels der Spanngurte wird es auch möglich, dass die plattenförmigen Gegenstände auch auf einer geneigten Ebene gelagert und/oder gehalten und/oder gestapelt werden.

Neben der Vorrichtung betrifft die Erfindung auch einen Stapel mit zumindest zwei aufeinander gestapelten plattenförmigen Gegenständen, wobei die plattenförmigen Gegenstände jeweils, vorzugsweise mit ihren Längskanten und/oder Eckbereichen, in Ausnehmungen von erfindungsgemäßen Vorrichtungen aufgenommen sind, wobei die plattenförmigen Gegenstände mittels der Vorrichtungen aufeinandergestapelt sind und die jeweils benachbarten plattenförmigen Gegenstände im Stapel , vorzugsweise überall, voneinander beabstandet sind. In anderen Worten bedeutet dies also, dass die plattenförmigen Gegenstände sich ausschließlich über die Vorrichtungen berühren.

Neben der Vorrichtung an sich und dem Stapel betrifft die Erfindung auch eine Verwendung von erfindungsgemäßen Vorrichtungen, wobei plattenförmige Gegenstände, vorzugsweise mit ihren Längskanten und/oder Eckbereichen, in Ausnehmungen der Vorrichtungen aufgenommen werden, und die plattenförmigen Gegenstände mittels der Vorrichtungen aufeinandergestapelt werden, wobei im Stapel jeweils benachbarte Vorrichtungen aufeinander aufliegen und die jeweils benachbarten plattenförmigen Gegenstände im Stapel, vorzugsweise überall, voneinander beabstandet sind.

Weitere Merkmale und Einzelheiten bevorzugter Ausgestaltungsformen der Erfindung werden exemplarisch in der nachfolgenden Figurenbeschreibung erläutert. Es zeigen:
- Fig. 1:: eine Darstellung eines Stapels von mittels der Vorrichtungen aufeinandergestapelten plattenförmigen Gegenständen;
- Fig. 2:: eine Darstellung einer Befestigungsmöglichkeit der Vorrichtung an einem plattenförmigen Gegenstand;
- Fig. 3:: eine Darstellung zum Aufeinanderstapeln zweier plattenförmiger Gegenstände mittels der Vorrichtungen;
- Fig. 4:: eine Darstellung einer in den Fig. 1 bis 3 verwendeten erfindungsgemäßen Vorrichtung im maximal geöffneten Zustand;
- Fig. 5:: eine Darstellung der Außenseite der Vorrichtung aus Fig. 4 im maximal geöffneten Zustand;
- Fig. 6:: eine Darstellung der Vorrichtung aus Fig. 4 im maximal geschlossenen Zustand;
- Fig. 7:: eine Explosionsdarstellung der Vorrichtung aus Fig. 4;
- Fig. 8:: eine Schnittdarstellung zur Vorrichtung aus Fig. 4.

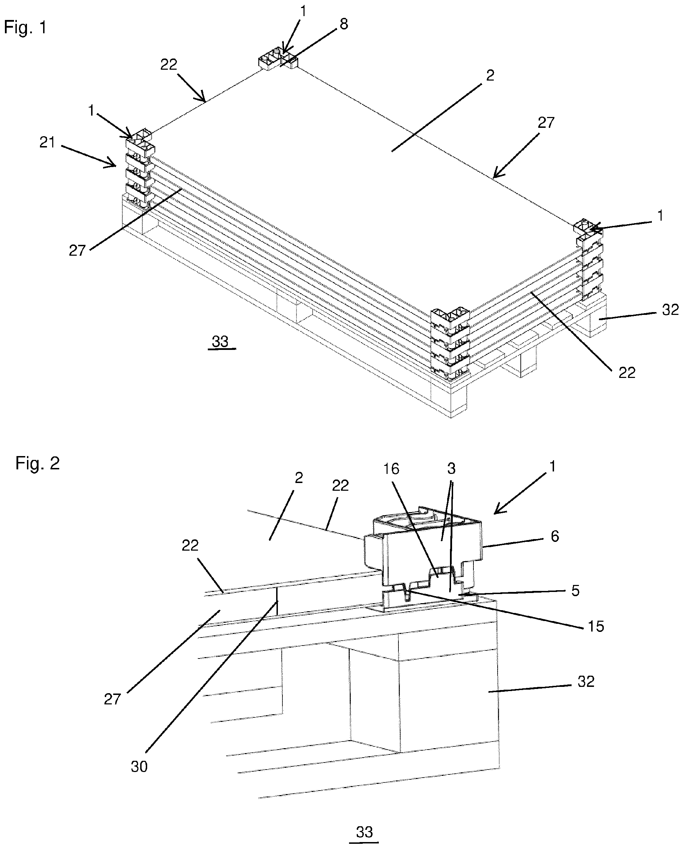

Fig. 1 zeigt beispielhaft vier, zum einem Stapel 21 aufeinandergestapelte, plattenförmige Gegenstände 2. Der in Fig. 1 perspektivisch dargestellte Stapel 21 umfasst mehrere erfindungsgemäße Vorrichtungen 1 sowie mehrere plattenförmige Gegenstände 2. Die plattenförmigen Gegenstände 2 sind deckungsgleich beziehungsweise bündig, jeweils unter Zwischenschaltung der Vorrichtungen 1 aufeinandergestapelt. Die plattenförmigen Gegenstände 2 sind hier beispielhaft auf einer Palette 32 gelagert. Die jeweils benachbarten plattenförmigen Gegenstände 2 sind, vorzugsweise überall, voneinander beabstandet und berühren sich ausschließlich indirekt über die Vorrichtungen 1. In diesem Beispiel sind die Vorrichtungen 1 zur Aufnahme jeweils eines Eckbereichs 8 der plattenförmigen Gegenstände 2 ausgebildet und entsprechend auch in den Eckbereichen 8 der plattenförmigen Gegenstände 2 angeordnet. Es ist ebenso denkbar, dass die jeweiligen Vorrichtungen 1 nicht an den Eckbereichen 8 der plattenförmigen Gegenstände 2 angeordnet sind, sondern sich alternativ auch an deren Längskanten 22 und/oder Querkanten 27 befinden.

Fig. 2 zeigt, wie die Vorrichtung 1 am Eckbereich 8 des plattenförmigen Gegenstands 2 befestigt ist. Ebenso ist ersichtlich, dass die Vorrichtung 1 einen Grundkörper 3 umfasst, der einen ersten Teilkörper 5 und einen zweiten Teilkörper 6 aufweist. Fig. 2 zeigt, dass der erste Teilkörper 5 ein erstes Führungselement 15 aufweist und der zweite 6 Teilkörper ein zweites Führungselement 16 aufweist.

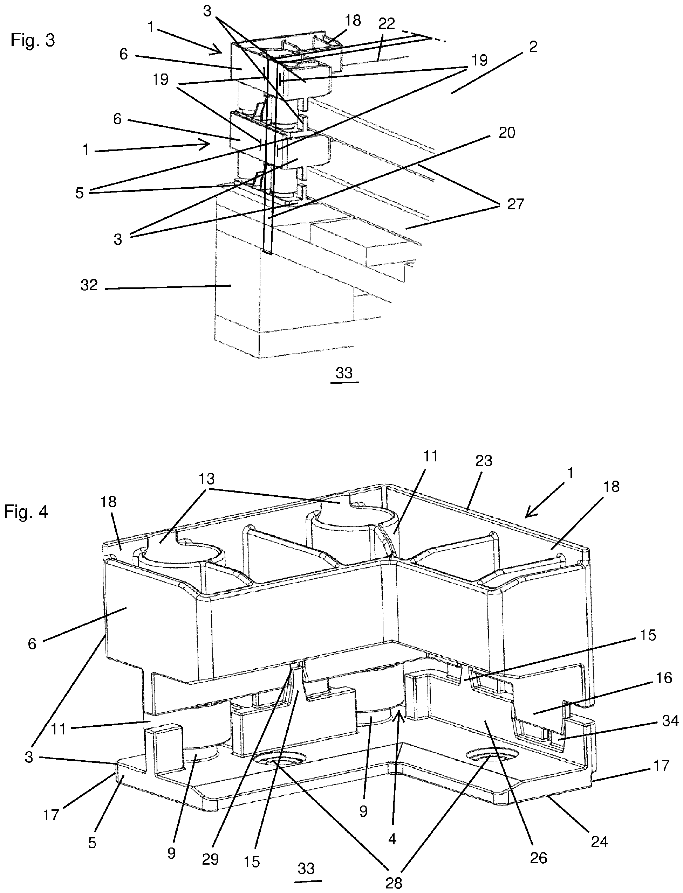

Fig. 3 zeigt zwei Vorrichtungen 1 und somit zwei Grundkörper 3. Ebenso ist beispielhaft das Aufeinanderstapeln von zwei entsprechenden plattenförmigen Gegenständen 2 gezeigt. Dies ist natürlich nur die kleinste Anzahl von plattenförmigen Gegenständen 2, die aufeinandergestapelt werden kann. In Fig. 3 ist ersichtlich, dass die plattenförmigen Gegenstände 2 überall voneinander beabstandet sind und nur indirekt über die Vorrichtung 1 in Kontakt stehen. Die Vorrichtung 1 ist an den Eckbereichen 8 des plattenförmigen Gegenstands 2 angebracht. Die Vorrichtungen 1 sind auf einer Palette 32 gelagert. Es ist aber ebenso denkbar, dass die Vorrichtungen 1 und somit die plattenförmigen Gegenstände 2 auf einem anderen Untergrund 33, beispielsweise auf dem Boden, platziert werden. In Fig. 3 ist ebenso ersichtlich, dass jeder Grundkörper 3 einen ersten Teilkörper 5 und einen zweiten Teilkörper 6 aufweist.

Fig. 4 zeigt die Vorrichtung 1 losgelöst vom plattenförmigen Gegenstand 2 in einer detaillierten Darstellung des Grundkörpers 3 beziehungsweise des ersten Teilkörper 5 und zweiten Teilkörpers 6.

In Fig. 4 wird gezeigt, dass am ersten Teilkörper 5 zwei Säulen 9 angeordnet sind und am zweiten Teilkörper 6 entsprechen zwei Hülsen 11 angeordnet sind. Die Säulen 9 können dabei, wie hier auch realisiert, von der jeweiligen Hülse 11 aufgenommen werden beziehungsweise in diese jeweils hineinreichen.

Ebenso ist in Fig. 4 ersichtlich, dass der zweite Teilköper 6 ein zweites Formschlusselement 18 und der erste Teilkörper 5 ein erstes Formschlusselement 17 aufweist. Es ist bevorzugt, wie hier auch realisiert, vorgesehen, dass beim Aufeinanderstapeln zweier plattenförmiger Gegenstände 2 mittels der Vorrichtungen 1, die Unterseite 24 des ersten Teilkörpers 5, auf die Oberseite 23 des zweiten Teilkörpers 6, platziert wird. Beim Stapeln des ersten Teilkörpers 5 einer ersten Vorrichtung 1 auf den zweiten Teilkörper 6 einer zweiten Vorrichtung 1 bilden das erste Formschlusselement 17 am ersten Teilkörper 5 mit dem zweiten Formschlusselement 18 am zweiten Teilkörper 6 einen Formschluss, wodurch ein Verrutschen der beiden aufeinander gestapelten Vorrichtungen 1 und damit auch der aufeinander gestapelten plattenförmigen Gegenstände 2 relativ zueinander verhindert wird, siehe auch Fig. 3.

In Fig. 4 ist die Ausnehmung 4 der Vorrichtung 1, mittels der der plattenförmige Gegenstand 2 aufgenommen werden kann, gezeigt. Die Ausnehmung 4 weist in Fig. 4 eine eckförmige, hier speziell eine Form im rechten Winkel, auf. Es ist aber ebenso denkbar, dass die Ausnehmung 4 längsgestreckt sein kann und den plattenförmigen Gegenstand 2 über seine Längskante 22 oder Querkante 27 aufnehmen kann. Es ist auch denkbar, dass die beiden Teilkörper 5,6 und/oder einer der beiden Teilkörper 5,6 z.B. auch eine dreieckige und/oder runde Form aufweisen kann bzw. können, wenn die plattenförmigen Gegenstände 2 an der Stelle, an der die jeweilige Vorrichtung 1 angeordnet werden soll, entsprechend ausgeformt ist.

In diesem Zusammenhang wird erwähnt, dass der Begriff Längskante 22 in der Regel die längere der beiden Kanten des plattenförmigen Gegenstands 2 beschreibt und der Begriff der Querkante 27 in der Regel die kürzere der beiden Seiten. Es besteht aber auch die Möglichkeit, dass die Längs- und Querkanten 22 und 27 die gleiche Länge aufweisen.

Das erste Führungselement 15 des ersten Teilkörpers 5 und das zweite Führungselement 16 des zweiten Teilkörpers 6 sind in Fig. 4 abgebildet. Sie ermöglichen ein Führen der beiden Teilkörper 5,6 aufeinander zu oder voneinander weg entlang einer Achse, besonders bevorzugt parallel zur Wirkrichtung 31 des elastischen Elements 7, welches weiter hinten noch erläutert wird.

In Fig. 4 ist ersichtlich, dass das erste Führungselement 15 eine konische Form mit abgeflachter Spitze aufweist. Alternativ zur konischen Form mit abgeflachter Spitze ist es aber zum Beispiel ebenso denkbar, dass das erste Führungselement 15 eine kegelförmig abgerundete Spitze aufweist. Es kann auch vorgesehen sein, dass das erste Führungselement 15 längsgestreckt und als Quader oder Zylinder oder Prisma ausgebildet ist. Für das zweite Führungselement 16 steht dieselbe Freiheit bei der Formgestaltung zur Verfügung.

Die beiden Teilkörper 5 und 6 weisen jeweils Aufnahmeausnehmungen 29 und 34 auf, in denen die Führungselemente 15 und 16 des jeweils anderen Teilkörpers 5 und 6 aufgenommen und geführt sind.

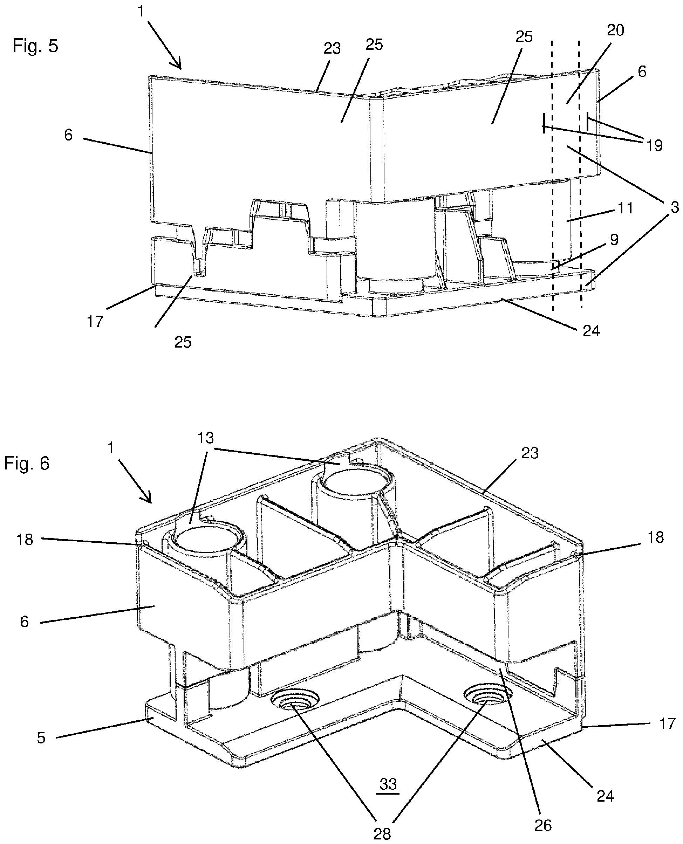

Fig. 5 zeigt die Außenseiten 25 der Vorrichtung 1 beziehungsweise des ersten Teilkörpers 5 und zweiten Teilkörpers 6. Die Außenseiten 25 sind die den Innenseiten 26 gegenüberliegenden Seiten und stehen somit nicht mit der Längskante 22 bzw. der Querkante 27 des plattenförmigen Gegenstands 2 in Kontakt.

Fig. 5 zeigt weiters, dass an der Außenseite 25 der Vorrichtung 1, hier am zweiten Teilkörper 6 jeweils eine Gurtaufnahme 19 angeordnet sein kann. Die Gurtaufnahme 19 weist in diesem Beispiel, wie in Fig. 5 gezeigt, eine schlitzförmige Gestalt auf, mittels der der Spanngurt 20 an der Vorrichtung 1 angebracht und gegen Verrutschen gesichert sein kann. Der Spanngurt 20 ist, wie in Fig. 5 gezeigt, vorzugsweise bandförmig ausgebildet. Das Material des Spanngurts 20 wird vorzugsweise so gewählt, dass es elastisch und/oder nicht schnell beschädigt und/oder leicht zu reinigen ist. Auch Spanngurte 20 aus Metall sind möglich. Der Spanngurt 20 kann bevorzugt hinsichtlich der Länge verstellt werden. In anderen Worten ist es also möglich, dass der Anwender den Spanngurt 20 je nach Dicke 30 der plattenförmigen Gegenstände 2 individuell in seiner Länge einstellen kann. In Fig. 3 ist beispielhaft dargestellt, wie mit einem, in den Gurtaufnahmen 19 angebrachten und geführten, Spanngurt 20 die Vorrichtungen 1 und die darin gehaltenen plattenförmigen Gegenstände 2 zusätzlich gegen ein Verrutschen gesichert werden können.

Fig. 6 zeigt die Vorrichtung 1 in einer Position, in der die Ausnehmung 4 zur Aufnahme des plattenförmigen Gegenstands 2 die geringste Öffnungsweite aufweist.

In Fig. 6 ist zu sehen, dass an den Säulen 9 jeweils ein Deckel 13 angeordnet ist.

Fig. 6 zeigt eine Aufnahmeöffnung 28 für eine Schraubenverbindung, vorzugsweise Bohrung, am ersten Teilkörper 5. Es ist denkbar, dass der erste Teilkörper 5 am plattenförmigen Gegenstand 2, oder auch an einer Palette 32 oder an einem Untergrund 33 über die Aufnahmeöffnung 28 mittels einer Schraube befestigt werden kann.

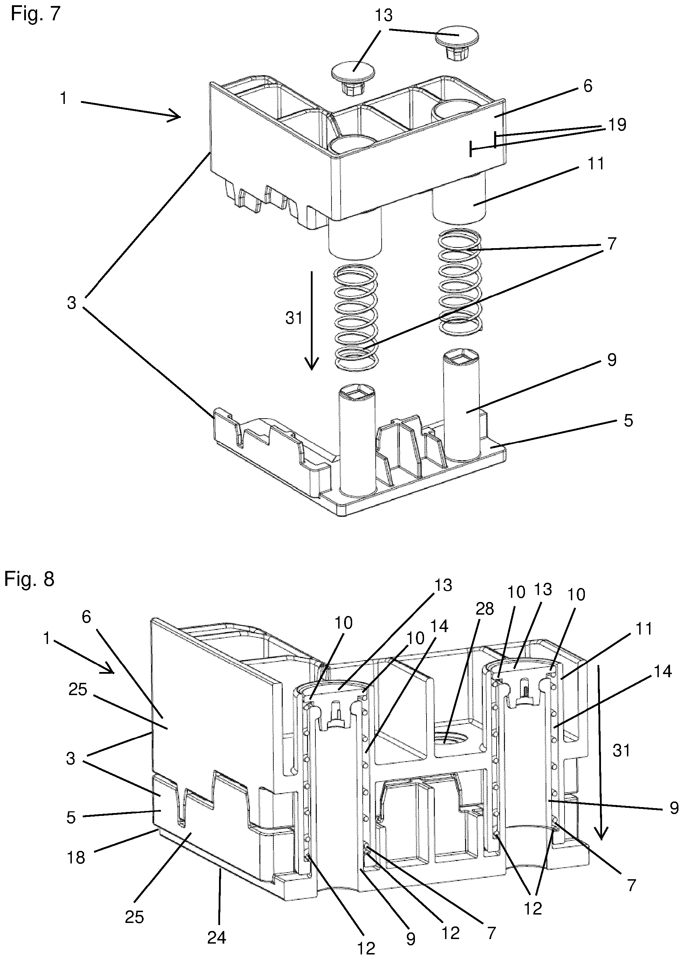

Fig. 7 zeigt die Vorrichtung 1 in einer Explosionsdarstellung und damit auch das elastische Element 7. Das elastische Element 7 ist hier in diesem Beispiel als Schraubenfeder ausgebildet. Im bevorzugsten Fall ist die Schraubenfeder eine Druckfeder, kann aber bei dementsprechender Abwandlung auch eine Zugfeder sein.

Die in diesem Ausführungsbeispiel vorhandenen zwei elastischen Elemente 7 wirken jeweils in eine Wirkrichtung 31, in der sie die beiden Teilkörper 5 und 6 in Richtung aufeinander zu vorspannen. Das bedeutet, dass die elastischen Elemente 7 so wirken, dass sie die Öffnungsweite der Ausnehmung 4 verringern, wodurch ein plattenförmiger Gegenstand 2 in der Ausnehmung 4 zwischen den beiden Teilkörpern 5 und 6 festgeklemmt wird.

Fig. 8 zeigt, wo die elastischen Elemente 7 bevorzugt angeordnet sind. Die elastischen Elemente 7 sind in diesem Ausführungsbeispiel jeweils in einem Zwischenraum 14 zwischen der Hülse 11 und der Säule 9 angeordnet. Am oberen Ende der Säule 9, also am vom ersten Teilkörper 5 abgewandten Ende, ist jeweils ein abnehmbarer Deckel 13 befestigt, welcher jeweils die erste Anlageschulter 10 für das elastische Element 7 ausbildet. Das jeweilige elastische Element 7 drückt auf der gegenüberliegenden Seite in Wirkrichtung 31 auf die jeweilige Anlageschulter 12, welche jeweils am Ende der jeweiligen Hülse 12 ausgebildet ist. Die lösbare Befestigung des jeweiligen Deckels 13 an der jeweiligen Säule 6 ermöglicht eine einfache Montage des jeweiligen elastischen Elements 7.

Fig. 8 zeigt auch, dass sich im zweiten Teilkörper 6 ebenso eine Aufnahmeöffnung 28 für eine Schraubenverbindung, vorzugsweise Bohrung, befinden kann. Über diese Aufnahmeöffnung 28 kann der zweite Teilkörper 6 an den plattenförmigen Gegenstand 2, oder einer Palette 32 oder einem Untergrund 33 angeschraubt werden.

**Legende**

| | | | |
|---|---|---|---|
| zu den Hinweisziffern: | | | |
| 1 | Vorrichtung | 30 | Dicke |
| 2 | plattenförmiger Gegenstand | 31 | Wirkrichtung |
| | | 32 | Palette |
| 3 | Grundkörper | 33 | Untergrund |
| 4 | Ausnehmung | 34 | Aufnahmeausnehmung |
| 5 | erster Teilkörper | | |
| 6 | zweiter Teilkörper | | |
| 7 | Elastisches Element | | |
| 8 | Eckbereich | | |
| 9 | Säule | | |
| 10 | erste Anlageschulter | | |
| 11 | Hülse | | |
| 12 | zweite Anlageschulter | | |
| 13 | Deckel | | |
| 14 | Zwischenraum | | |
| 15 | erstes Führungselement | | |
| 16 | zweites Führungselement | | |
| 17 | erstes Formschlusselement | | |
| 18 | zweites Formschlusselement | | |
| 19 | Gurtaufnahme | | |
| 20 | Spanngurt | | |
| 21 | Stapel | | |
| 22 | Längskante | | |
| 23 | Oberseite | | |
| 24 | Unterseite | | |
| 25 | Außenseite | | |
| 26 | Innenseite | | |
| 27 | Querkante | | |
| 28 | Aufnahmeöffnung | | |
| 29 | Aufnahmeausnehmung | | |

## Patentansprüche

1. Vorrichtung (1) zum Anbringen an einem plattenförmigen Gegenstand (2), wobei die Vorrichtung (1) einen Grundkörper (3) aufweist, welcher eine zumindest zu einer Seite hin offene Ausnehmung (4) zur Aufnahme eines Teilbereichs des plattenförmigen Gegenstands (2) aufweist,
**dadurch gekennzeichnet, dass**
der Grundkörper (2) einen ersten Teilkörper (5) und einen zweiten Teilkörper (6) aufweist, wobei der erste (5) und der zweite Teilkörper (6) relativ zueinander bewegbar aneinander gelagert sind, wobei die Ausnehmung (4) zwischen den Teilkörpern (5, 6) ausgebildet ist.

2. Vorrichtung (1) nach Anspruch 1, wobei die Vorrichtung (1) ein elastisches Element (7) aufweist, wobei die beiden Teilkörper (5, 6) zum Festklemmen des plattenförmigen Gegenstands (2) in der Ausnehmung (4) vom elastischen Element (7) in Richtung aufeinander zu elastisch vorgespannt sind.

3. Vorrichtung (1) nach Anspruch 2, wobei das elastische Element (7) eine Schraubenfeder ist und/oder wobei das elastische Element (7) durch voneinander Entfernen der Teilkörper (5, 6) komprimierbar ist.

4. Vorrichtung (1) nach wenigstens einem der vorangehenden Ansprüche, wobei die Ausnehmung (4) zur Aufnahme eines Eckbereichs (8) des plattenförmigen Gegenstandes (2) ausgeformt ist.

5. Vorrichtung (1) nach wenigstens einem der vorangehenden Ansprüche, wobei der erste Teilkörper (5) eine Säule (9) mit einer ersten Anlageschulter (10) für das elastische Element (7) und der zweite Teilkörper (6) eine Hülse (11) mit einer zweiten Anlageschulter (12) für das elastische Element (7) aufweist.

6. Vorrichtung (1) nach Anspruch 5, wobei die Säule (9) ein längserstrecktes Säulenelement und einen lösbar am Säulenelement angebrachten Deckel (13) aufweist und die erste Anlageschulter (10) an dem Deckel (13) ausgebildet ist.

7. Vorrichtung (1) nach Anspruch 5 oder 6, wobei das elastische Element (7) in einem Zwischenraum (14) zwischen der Säule (9) und der Hülse (11) angeordnet ist.

8. Vorrichtung (1) nach wenigstens einem der vorangehenden Ansprüche, wobei der erste Teilkörper (5) ein erstes Führungselement (15) und der zweite Teilkörper (6) ein zweites Führungselement (16) zum Führen der Teilkörper (5, 6) bei einer Relativbewegung aufeinander zu und voneinander weg aufweist.

9. Vorrichtung (1) nach wenigstens einem der vorangehenden Ansprüche, wobei der erste Teilkörper (5) auf einer von der Ausnehmung (4) abgewandten Seite ein erstes Formschlusselement (17) und der zweite Teilkörper (6) auf einer von der Ausnehmung (4) abgewandten Seite ein zweites Formschlusselement (18) aufweist.

10. Vorrichtung (1) nach Anspruch 9, wobei das elastische Element (7) in eine Wirkrichtung (31) vorgespannt ist und das erste Formschlusselement (17) und das zweite Formschlusselement (18) für einen Formschluss in Richtung quer oder orthogonal zur Wirkrichtung (31) ausgebildet sind.

11. Vorrichtung (1) nach wenigstens einem der vorangehenden Ansprüche, wobei der erste Teilkörper (5) und/oder der zweite Teilkörper (6) eine Gurtaufnahme (19) zum Anbringen eines Spanngurts (20) aufweist und/oder aufweisen.

12. Stapel (21) mit zumindest zwei aufeinander gestapelten plattenförmigen Gegenständen (2), wobei die plattenförmigen Gegenstände (2) jeweils, vorzugsweise mit ihren Längskanten (22) und/oder Eckbereichen (8), in Ausnehmungen (4) von Vorrichtungen (1) nach einem der Ansprüche 1 bis 11 aufgenommen sind, wobei die plattenförmigen Gegenstände (2) mittels der Vorrichtungen (1) aufeinandergestapelt sind und die jeweils benachbarten plattenförmigen Gegenstände (2) im Stapel (21), vorzugsweise überall, voneinander beabstandet sind.

13. Verwendung von Vorrichtungen (1) nach einem der Ansprüche 1 bis 11, wobei plattenförmige Gegenstände (2), vorzugsweise mit ihren Längskanten (22) und/oder Eckbereichen (8), in Ausnehmungen (4) der Vorrichtungen (1) aufgenommen werden, und die plattenförmigen Gegenstände (2) mittels der Vorrichtungen (1) aufeinandergestapelt werden, wobei im Stapel (21) jeweils benachbarte Vorrichtungen (1) aufeinander aufliegen und die jeweils benachbarten plattenförmigen Gegenstände (2) im Stapel (21), vorzugsweise überall, voneinander beabstandet sind.
